# EUROPÄISCHE PATENTSCHRIFT

(11) **EP 1 222 782 B1**
(45) Veröffentlichungstag und Bekanntmachung des Hinweises auf die Patenterteilung: **04.01.2006**
(21) Anmeldenummer: 00965758.6
(22) Anmeldetag: 17.08.2000
(51) Int. Cl.: H04L 12/58, H04Q 7/22, H04M 3/533

(54) **VERFAHREN UND ANPASSUNGSVORRICHTUNG ZUR ÜBERTRAGUNG VON NACHRICHTEN ZWISCHEN MINDENSTENS EINER ZENTRALE UND EINEM ENDGERÄT UND ANPASSUNGSVORRICHTUNG DAFÜR**
METHOD AND ADAPTION DEVICE FOR TRANSMITTING MESSAGES BETWEEN AT LEAST A CENTRAL UNIT AND A TERMINAL
PROCEDE ET ADAPTATEUR DE TRANSMISSION D'INFORMATIONS ENTRE AU MOINS D'UNE UNITE CENTRALE ET UN TERMINAL

(30) Priorität: 01.10.1999 DE 19947578; 22.11.1999 DE 19956023
(43) Veröffentlichungstag der Anmeldung: 17.07.2002
(60) Teilanmeldung: 05019596.5
(73) Patentinhaber: ROBERT BOSCH GMBH, 70442 Stuttgart (DE)
(72) Erfinder: LAUMEN, Josef, 31141 Hildesheim (DE); REINECKE, Joerg, 38173 Sickte (DE); SCHANGE, Frank, 31135 Hildesheim (DE); SCHMIDT, Gunnar, 38304 Wolfenbuettel (DE)
(86) Internationale Anmeldenummer: PCT/DE2000/002780
(87) Internationale Veröffentlichungsnummer: WO 2001/026310

(56) Entgegenhaltungen:
- EP-A- 0 924 946
- GB-A- 2 328 110
- US-A- 5 742 668

## Beschreibung

Die Erfindung geht von einem Verfahren zur Übertragung von Nachrichten zwischen mindestens einer Zentrale und einem Endgerät und von einer Anpassungsvorrichtung dafür nach der Gattung der unabhängigen Ansprüche aus.

Verfahren zur Übertragung von Nachrichten zwischen einer Zentrale und einem Endgerät sind bereits bekannt.

Aus der US 5,742,668 ist ein Netzwerk für elektronische Nachrichten bekannt, das einen Teilnehmer in die Lage versetzt, ferngesteuert den Empfang schnurgebundener und schnurloser elektronischer Textnachrichten zu steuern. Die Optionen des Teilnehmers hinsichtlich des Nachrichtenempfangs sind in einer Datenbank abgelegt, die vom Teilnehmer über schnurgebundene oder schnurlose Kommunikation verändert werden können.

Aus der EP 0 924 946 A1 ist ein Telekommunikationssystem und Verfahren zum Austausch von Informationen zwischen einem E-Mail-Service und einem Teilnehmer in einem Telekommunikationsnetz bekannt. Bei einem Verfahren zur Übermittlung von Informationen aus für einen Teilnehmer eines Telekommunikationsnetzes bestimmten, in einem E-Mail-Service abgelegten E-Mails werden nach Aktivierung eines entsprechenden Dienstes bei dem E-Mail-Service für den Teilnehmer einlangende E-Mail-Nachrichten zumindest zu Teilen in Sprache umgewandelt, an einen Voice-Mail-Service weitergeleitet und dort als gesprochene Nachricht bereitgestellt. Bei einem geeigneten Telekommunikationssystem ist ein E-Mail/Voice-Mailkonverter vorgesehen, der zur zumindest teilweisen Umwandlung von E-Mail-Nachrichten in Sprache und/oder von Sprache in digitale Schriftform eingerichtet ist, wobei für die Ansteuerung des Konverters durch Befehtsnachrichten eines Teilnehmers eine Steuerlogik vorgesehen ist.

Aus der GB 2 328 110 A ist ein wählbares Filterprofil für Nachrichten verschiedener Medien bekannt. Dabei kann der Benutzer eine Vielzahl von Benutzerprofilen erzeugen, speichern und abrufen, die angeben, wie solche Nachrichten sortiert und priorisiert werden. Der Benutzer wählt ein bestimmtes Profil aus, das für eine bestimmte Situation geeignet ist. Nur Nachrichten, die mit den Kriterien des ausgewählten Profils übereinstimmen, werden zum Benutzer weitergeleitet. Diese Kriterien können vom Benutzer ausgewählt werden und umfassen Priorität, Länge der Nachricht, Absender.

Beim so genannten Internet E-Mail Dienst werden Nachrichten von einem sog. Mail-Client erzeugt und mit dem so genannten SMTP (Simple Mail Transfer Protocol) gemäß RFC 821 (Request for Command) der IETF (Internet Engineering Task Force) oder mit dem ESMTP (Enhanced Simple Mail Transfer Protocol) gemäß RFC 1869 der IETF über das Internet zu einem Mail-Server eines Empfängers übermittelt. Vom Mail-Server kann der Empfänger ebenfalls mit Hilfe eines Mail-Clients auf die gesendete Nachricht zugreifen. Für den Zugriff auf die gesendete Nachricht werden entsprechende Protokolle verwendet, bspw. das POP (Post Office Protocol) gemäß RFC 1729 der IETF oder das IMAP (Internet Message Access Protocol) gemäß RFC 2060 der IETF oder auch herstellerspezifische Protokolle. Diese Protokolle regeln den Austausch von Nachrichten zwischen dem Empfänger und dem Mail-Server, wie bspw. das Anmelden eines Mail-Clients am Mail-Server, die Authentifizierung des Mail-Client, usw. Zur Übertragung der Nachrichten vom Mail-Server zum Mail-Client wird meistens das SMTP oder das ESMTP verwendet. Um das Eintreffen neuer Nachrichten auf dem Mail-Server zu regiscrieren, schaut der Mail-Client sporadisch oder regelmäßig auf dem Mail-Server nach. Dieser Vorgang wird auch als Polling bezeichnet. Detektiert der Mail-Client auf diese Weise für den Benutzer des Mail-Clients auf dem Mail-Server vorliegende Nachrichten, signalisiert er dies dem Benutzer. Der Benutzer kann dann den Zugriff auf die für ihn auf dem Mail-Server abgelegten Nachrichten einleiten. Das Einleiten des Zugriffs wird auch als Pull-Modus bezeichnet. Die Nachrichten werden dann vom Mail-Server zum Mail-Client übertragen und können dort für den Benutzer wiedergegeben werden. Das beschriebene Verfahren ist dabei im wesentlichen für Festverbindungen gedacht, bei dem der Mail-Client eine permanente Verbindung oder eine Verbindung mit relativ kurzen zeitlichen Unterbrechungen zum Mail-Server hat. SMTP wurde ursprünglich nur für Textnachrichten vorgesehen. Durch MIME (Multiporpose Internet Mail Extensions) gemäß RFC 1521 der IETF können solche Nachrichten durch Anhänge erweitert werden. Diese Anhänge können dabei beliebiges Format haben und sind nicht auf Textnachrichten festgelegt. Für die Übertragung werden diese Anhänge jedoch derart umcodiert, daß sie ebenfalls in Form von einfachen Textnachrichten übertragen werden können.

Der SMS-Dienst (Short Message Service) gemäß dem GSM-Standard (Global System for Mobile Communications), GSM 03.40 ETSI unterscheidet sich grundlegend vom beschriebenen Internet E-Mail Dienst. Er ist ausschließlich auf Textnachrichten mit einer maximalen Länge von 160 Zeichen beschränkt, wobei Erweiterungen durch Verkettung mehrerer solcher Textnachrichten bestehen. Der SMS-Dienst basiert weiterhin darauf, daß die Textnachrichten von einem SMS-Sender an einen SMS-Server übermittelt werden, der sie dann automatisch an ein mobiles Endgerät überträgt. Dieses Verfahren wird auch als Push-Modus bezeichnet. Ist das mobile Endgerät im Mobilfunknetz nicht verfügbar, z.B. weil es ausgeschaltet ist, so wird die Textnachricht im SMS-Server zwischengespeichert. Ist im folgenden dann,das mobile Endgerät wieder erreichbar, so wird dies dem SMS-Server signalisiert und dieser startet dann automatisch die Übertragung der Textnachricht ans mobile Endgerät.

### Vorteile der Erfindung

Das erfindungsgemäße Verfahren und die erfindungsgemäße Anpassungsvorrichtung mit den Merkmalen der unabhängigen Ansprüche haben demgegenüber den Vorteil, daß der Nachrichtenaustausch durch eine Anpassungsvorrichtung zwischen der mindestens einen Zentrale und dem Endgerät in Abhängigkeit mindestens einer Vorgabe des Endgerätes oder der mindestens einen Zentrale gesteuert wird. Durch die Anpassungsvorrichtung ist eine Anpassung von Zentralen oder Servern verschiedener Dienste an ein Endgerät möglich, ohne daß eine direkte Verbindung zwischen dem Endgerät und der jeweiligen Zentrale aufgebaut werden muß und ohne daß zwischen dem Endgerät und der jeweiligen Zentrale dienstespezifische und somit je nach Zentrale unterschiedliche Protokolle übertragen werden müssen. Durch das erfindungsgemäße Verfahren und die erfindungsgemäße Anpassungsvorrichtung ist die entsprechende Zentrale für das Endgerät nicht sichtbar, sondern lediglich die Anpassungsvorrichtung. Somit lassen sich verschiedene Dienste für den Nachrichtenaustausch zwischen dem Endgerät und verschiedenen Zentralen durch die Anpassungsvorrichtung integrieren, so daß ein einheitlicher Nachrichtenaustausch zwischen dem Endgerät und der Anpassungsvorrichtung für die Realisierung der verschiedenen Dienste ermöglicht wird. Sowohl für den Fall, daß nur eine einzige Zentrale an die Anpassungsvorrichtung angeschlossen ist, als auch für den Fall mehrerer an die Anpassungsvorrichtung angeschlossener Zentralen läßt sich der Vorteil bewirken, daß die Anpassungsvorrichtung den Nachrichtenaustausch zwischen der jeweiligen Zentrale und dem Endgerät an Vorgaben des Benutzers des Endgerätes, an die Eigenschaften und den Leistungsumfang des Endgerätes oder an Vorgaben der jeweiligen Zentrale anpassen kann. Auf diese Weise läßt sich der Nachrichtenaustausch in Abhängigkeit der Benutzervorgaben oder der Geräteeigenschaften für jede aufzubauende Verbindung zwischen einer Zentrale und einem Endgerät individuell und flexibel optimieren.

Durch die Anpassungsvorrichtung werden dienstespezifische Merkmale für den Nachrichtenaustausch zwischen dem Endgerät und der entsprechenden Zentrale aufgehoben und durch benutzerspezifische Merkmale ersetzt, die für die Übertragung der Nachrichten zum Endgerät durch Vorgabe des Endgerätes bzw. des Benutzers des Endgerätes definiert sein können.

Durch die in den Unteransprüchen aufgeführten Maßnahmen sind vorteilhafte Weiterbildungen und Verbesserungen des Verfahrens zur Übertragung von Nachrichten zwischen mindestens einer Zentrale und einem Endgerät und der Anpassungsvorrichtung gemäß den unabhängigen Ansprüchen möglich.

So kann beispielsweise in vorteilhafter Weise vom Benutzer des Endgerätes ein Übertragungsmodus unabhängig vom verwendeten Dienst vorgegeben werden, so daß mittels der Anpassungsvorrichtung beispielsweise auch beim SMS-Dienst ein Pull-Modus oder beim Internet-E-Mail-Dienst ein Push-Modus realisiert werden kann.

Besonders vorteilhaft ist es, daß von der Anpassungsvorrichtung mehrere Nachrichten, insbesondere von unterschiedlichen Zentralen, zusammengefaßt an das Endgerät in unterschiedlichen Modi übertragen werden. Auf diese Weise wird die Übersichtlichkeit für den Benutzer beim Empfang der Nachrichten erhöht und verhindert, daß das Endgerät zum Empfang der Nachrichten von verschiedenen Zentralen mehrmals aktiviert werden muß.

Ein weiterer Vorteil besteht darin, daß von der Anpassungsvorrichtung je nach Vorgabe des Endgerätes einzelne Teile einer aus mehreren Elementen bestehenden Nachricht segmentiert und verarbeitet werden. Auf diese Weise läßt sich eine automatische benutzerindividuelle Vorverarbeitung solcher Nachrichten realisieren, die keine Eingabe des Benutzers am Endgerät erfordert, solange die Vorgabe für die Verarbeitung solcher Nachrichten nicht geändert werden soll.

Besonders vorteilhaft ist es, daß mehrere verschiedene Datensätze von einem Benutzer des Endgerätes für verschiedene mit dem Endgerät realisierbare Funktionalitäten vorgegeben und in einer der Anpassungsvorrichtung zugeordneten Speichervorrichtung abgelegt werden. Auf diese Weise läßt sich der Nachrichtenaustausch zwischen der jeweiligen Zentrale und dem Endgerät über die Anpassungsvorrichtung an die Eigenschaften und den Leistungsumfang verschiedener Endgerätekonfigurationen anpassen. Durch das Ablegen der Datensätze in der Speichervorrichtung müssen sie nicht bei jedem Verbindungsaufbau zwischen Endgerät und Anpassungsvorrichtung übertragen, sondern lediglich in der Speichervorrichtung ausgewählt werden, wodurch Übertragungskapazität eingespart wird.

Vorteilhaft ist es auch, daß vom Benutzer des Endgerätes ein Datensatz ausgewählt wird, daß vom Endgerät die den ausgewählten Datensatz kennzeichnende Kennung an die Anpassungsvorrichtung übertragen wird, daß in der Anpassungsvorrichtung geprüft wird, ob ein Datensatz mit der empfangenen Kennung in der Speichervorrichtung abgelegt ist, und daß bei Vorliegen eines zur empfangenen Kennung gehörenden Datensatzes in der Speichervorrichtung dieser Datensatz ausgewählt wird. Auf diese Weise muß für die Auswahl des gewünschten Datensatzes nur die entsprechende Kennung vom Endgerät zur Anpassungsvorrichtung übertragen werden, so daß die für die Auswahl des gewünschten Datensatzes erforderliche zu übertragende Datenmenge minimiert und die Übertragungskapazität möglichst wenig beeinträchtigt wird.

Besonders vorteilhaft ist es, daß die Datensätze in der Reihenfolge ihres Ablegens in der Speichervorrichtung numeriert werden, wobei die jeweilige Kennung der Datensätze aus dieser Numerierung gebildet wird. Auf diese Weise ist eine sehr einfache und wenig aufwendige Möglichkeit zur Kennungsbildung gegeben, wobei die so gebildeten Kennungen jeweils als Nummer ausgebildet sind und daher besonders wenig Übertragungskapazität für ihre Übertragung beanspruchen.

### Zeichnung

Ein Ausführungsbeispiel der Erfindung ist in der Zeichnung dargestellt und in der nachfolgenden Beschreibung näher erläutert. Es zeigen Figur 1 eine schematische Darstellung einer Integration verschiedener Informationsnetze für einen integralen Multimedia-Nachrichtendienst, Figur 2 ein Blockschaltbild einer erfindungsgemäßen Anpassungsvorrichtung zur Durchführung des erfindungsgemäßen Verfahrens, Figur 3 eine Darstellung der für den erfindungsgemäßen Nachrichtenaustausch erforderlichen Protokollschichten in allgemeiner Form, Figur 4 die Protokollschichten für den erfindungsgemäßen Nachrichtenaustausch in einer ersten speziellen Ausführungsform, Figur 5 die Protokollschichten für den erfindungsgemäßen Nachrichtenaustausch in einer zweiten speziellen Ausführungsform und Figur 6 die Protokollschichten für den erfindungsgemäßen Nachrichtenaustausch in einer dritten speziellen Ausführungsform.

### Beschreibung des Ausführungsbeispiels

Im Rahmen der Standardisierung von UMTS (Universal Mobile Telecommunications System) wird zur Zeit gemäß der Veröffentlichung "Multimedia Messaging Service, Functional Description", 3GPP TS 23.140, v.0.1.0, 3GPP Technical Subgroup Terminals, 1999-10 ein Multimedia Messaging Service (MMS) spezifiziert. MMS ist ein Service, der - ausgehend vom heutigen SMS-Service in GSM (SMS: Short Message Service; GSM: Global System for Mobile Communications), das Versenden und Empfangen von Nachrichten mittels eines beispielsweise als Mobiltelefon ausgebildeten Endgerätes 5 ermöglichen soll.

Der heutige SMS-Service ist auf maximal 160 Zeichen pro Nachricht beschränkt und es kann lediglich Text übertragen werden, das heißt es gibt einen eingeschränkten Zeichensatz, der benutzt werden kann.

Anders als eine SMS soll eine MM (Multimedia Message) weder auf eine bestimmte Größe noch auf die Darstellung von Text beschränkt sein. Eine MM soll stattdessen vielfältige Medientypen unterstützen.

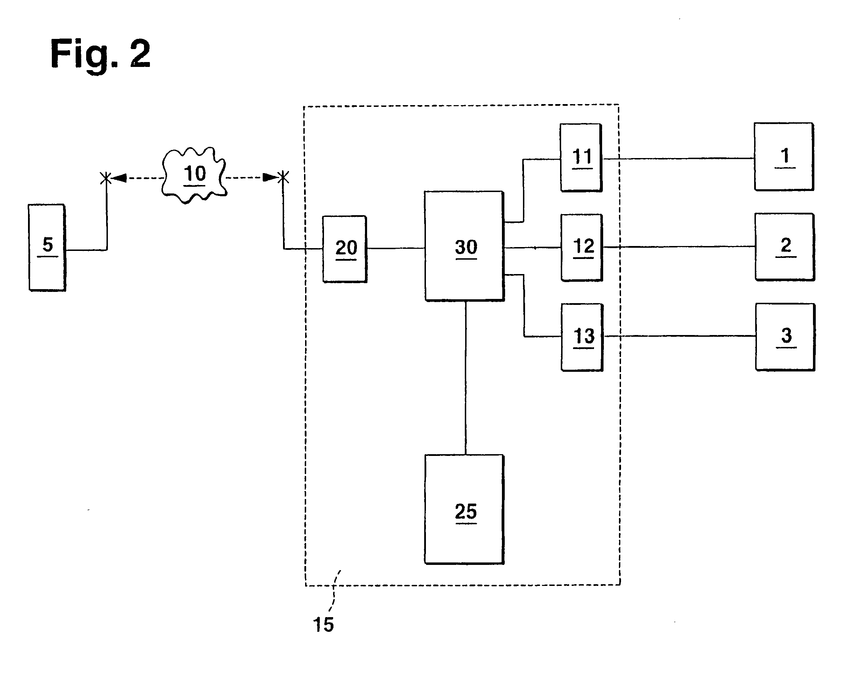

Eine zentrale Funktion kommt im MMS Service einer als MMS-Relay bezeichneten Anpassungsvorrichtung 15 zu. Dieses Element kann über unterschiedlichste Medien an verschiedenartige als Server oder Diensteanbieter bezeichnete Zentralen 1, 2, 3, wie beispielsweise Email-Server, Fax-Server, Voice-Mailbox, MMS-Server oder dergleichen angeschlossen werden, wie in Figur 2 gezeigt. Es dient dazu, dem Benutzer des Endgerätes 5 all jene Informationen/Nachrichten zugänglich zu machen, welche auf den genannten Servern vorliegen.

Über das MMS-Relay 15 hat der Benutzer des Endgerätes 5 somit Zugriff auf seine Emails, die auf einem Email-Server liegen, auf Faxe, die auf einem Fax-Server auf ihn "warten", und auf Sprach-Nachrichten, die auf einer Voice-Mailbox für ihn aufgezeichnet wurden.

Neben dem Empfang von Nachrichten ist es jedoch auch angedacht, daß der mobile Benutzer Nachrichten verfaßen und diese über das MMS-Relay 15 an den gewünschten Empfänger verschicken kann.

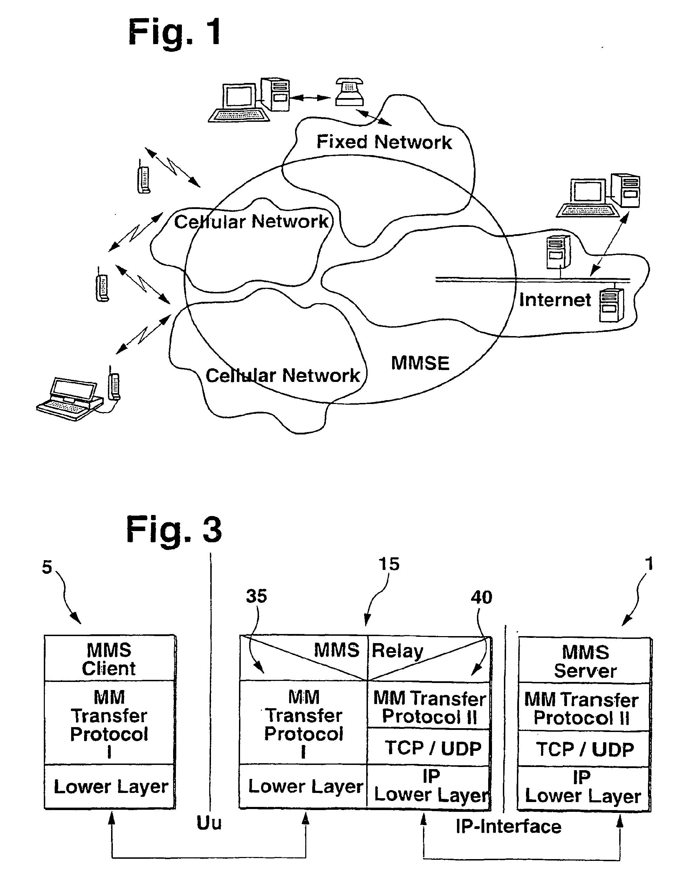

Figur 1 zeigt schematisch ein MMSE (Multimedia Messaging Service Environment), wie es beispielsweise für Mobilfunksysteme nach dem UMTS-Standard (Universal Mobile Telecommunications System) oder nach dem GSM-Standard (Global System for Mobile Communications) vorgesehen sein kann. Das MMSE stellt dabei ein System dar, in dem unterschiedliche neue und bestehende Dienste, wie in der Mobilfunktelefonie, Festnetztelefonie, Internet und dergleichen integriert und die bisher bestehende Trennung der einzelnen Dienste innerhalb der verschiedenen Netze aufgehoben ist. Dabei ist der Mobilfunktelefoniedienst in Figur 1 anhand zweier Mobilfunknetze dargestellt, die jeweils als "Cellular Network" bezeichnet sind. Der Festnetztelefoniedienst ist in Figur 1 als Festnetz dargestellt und durch den Begriff "Fixed Network" gekennzeichnet. Der Internet-Dienst ist in Figur 1 als Internet dargestellt und bezeichnet. Das MMSE bezieht dabei gemäß dem Beispiel nach Figur 1 alle dargestellten Netze oder Dienste ein. Dazu umfaßt das MMSE verschiedene Diensteelemente, die flexibel in einem beliebigen der dargestellten Netze implementiert werden können.

Ein solches Diensteelement ist die bereits erwähnte Anpassungsvorrichtung 15 gemäß Figur 2. Die Anpassungsvorrichtung 15 umfaßt eine Steuerung 30, an die eine Speichervorrichtung 25 angeschlossen ist. Weiterhin ist an die Steuerung 30 eine vierte Schnittstelle 20 zu einem Endgerät 5 angeschlossen, wobei es sich bei der vierten Schnittstelle 20 beispielsweise um eine Luftschnittstelle oder drahtlose Schnittstelle und beim Endgerät 5 um ein mobiles Endgerät, beispielsweise in Form eines Mobiltelefons handeln kann. Der Austausch von Daten zwischen dem Endgerät 5 und der vierten Schnittstelle 20 erfolgt über ein Telekommunikationsnetz 10, das bei Ausbildung der vierten Schnittstelle 20 als drahtlose Schnittstelle und des Endgerätes 5 als mobiles Endgerät als Mobilfunknetz ausgebildet sein kann. Es kann jedoch auch vorgesehen sein, daß das Telekommunikationsnetz 10 ein Festnetz ist und das Endgerät 5 sowie die vierte Schnittstelle 20 drahtgebunden sind. Im folgenden soll jedoch beispielhaft der Fall beschrieben werden, daß die vierte Schnittstelle 20 drahtlos und das Endgerät 5 mobil ausgebildet sind.

An die Steuerung 30 ist weiterhin eine erste Schnittstelle 11, eine zweite Schnittstelle 12 und eine dritte Schnittstelle 13 angeschlossen. Über die erste Schnittstelle 11 ist eine erste Zentrale 1 an die Anpassungsvorrichtung 15 angeschlossen. Über die zweite Schnittstelle 12 ist eine zweite Zentrale 2 an die Anpassungsvorrichtung 15 angeschlossen. Über die dritte Schnittstelle 13 ist eine dritte Zentrale 3 an die Anpassungsvorrichtung 15 angeschlossen.

Jede der Zentralen 1, 2, 3 bietet dabei einen oder mehrere Dienste an. Die von den Zentralen 1, 2, 3 angebotenen Dienste unterscheiden sich dabei in dem hier beschriebenen Ausführungsbeispiel voneinander. Um nun von einer der Zentralen 1, 2, 3 einen Dienst in Anspruch nehmen zu können, muß das Endgerät 5 nicht jeweils eine dienstespezifische Verbindung zur entsprechenden Zentrale aufbauen. Vielmehr baut das Endgerät 5 für jeden in Anspruch zu nehmenden Dienst eine Verbindung zur Anpassungsvorrichtung 15 auf, die die verschiedenen Dienste der Zentralen 1, 2, 3 für das Endgerät 5 in eine einheitliche Form wandelt. Diese einheitliche Form kann vom Endgerät 5 bzw. von einem Benutzer des Endgerätes 5 vorgegeben werden und in Form eines Datensatzes vom Endgerät 5 über das Telekommunikationsnetz 10 an die Anpassungsvorrichtung 15 übertragen und in der Speichervorrichtung 25 abgelegt werden.

Im folgenden soll die erste Zentrale 1 beispielhaft für einen elektronischen Postdienst, wie beispielsweise E-Mail, vorgesehen sein. Die zweite Zentrale 2 soll beispielhaft für einen SMS-Dienst vorgesehen sein. Die dritte Zentrale 3 soll beispielhaft für einen Fax-Mail-Dienst vorgesehen sein. Vom Endgerät 5 soll nun beispielsweise in der Speichervorrichtung 25 die Vorgabe abgespeichert sein, wonach Nachrichten von der Anpassungsvorrichtung 15 zum Endgerät 5 in Form von SMS-Nachrichten übertragen werden sollen. Es könnten umgekehrt in einer anderen Ausführungsform in entsprechender Weise auch SMS-Nachrichten in Form von E-Mails von der Anpassungsvorrichtung 15 zum Endgerät 5 übertragen werden. Weiterhin kann die in der Speichervorrichtung 25 abgelegte Vorgabe des Endgerätes 5 vorsehen, daß die Nachrichten von der Anpassungsvorrichtung 15 zum Endgerät 5 im beschriebenen Pull-Modus übertragen werden, d.h. also nur nach Aufforderung durch das Endgerät 5. Eine in der ersten Zentrale 1 für das Endgerät 5 eingehende Nachricht wird aufgrund entsprechender Signalisierung der ersten Zentrale 1 von der Steuerung 30 erkannt. Dem Endgerät 5 wird anschließend seitens der Anpassungsvorrichtung 15 über das Telekommunikationsnetz 10 signalisiert, daß eine Nachricht für das Endgerät 5 in der ersten Zentrale 1 vorliegt. Durch Versenden eines entsprechenden Aufforderungssignals über das Telekommunikationsnetz 10 kann das Endgerät 5 daraufhin die Anpassungsvorrichtung 15 zur Übertragung der in der ersten Zentrale 1 vorliegenden Nachricht auffordern. Die Steuerung 30 veranlaßt bei Detektion dieses Aufforderungssignals die erste Zentrale 1 zur Übermittlung der für das Endgerät 5 vorliegenden Nachricht. Liegt diese Nachricht beispielsweise als elektronische Postnachricht vor, so erkennt die Steuerung 30 dies. Gemäß der in der Speichervorrichtung 25 abgelegten Vorgabe des Endgerätes 5 wandelt die Steuerung 30 die elektronische Postnachricht dann in eine oder mehrere SMS-Nachrichten um, je nach Länge der elektronischen Postnachricht. Diese SMS-Nachricht oder diese SMS-Nachrichten können bei Bedarf, zum Beispiel bei vorübergehender Nichterreichbarkeit des Endgerätes 5 über das Telekommunikationsnetz 10 ebenfalls in der Speichervorrichtung 25 zwischengespeichert werden. Eine Übertragung der SMS-Nachricht oder der SMS-Nachrichten von der Anpassungsvorrichtung 15 zum Endgerät 5 erfolgt dann bei Erreichbarkeit des Endgerätes 5 und wie beschrieben unter der Voraussetzung, daß das Aufforderungssignal von der Steuerung 30 detektiert wurde.

In entsprechender Weise wandelt die Steuerung 30 eine von der dritten Zentrale 3 über die dritte Schnittstelle 13 empfangene Fax-Mail-Nachricht in eine oder mehrere SMS-Nachrichten um und sendet diese nach Aufforderung durch das Endgerät 5 über die vierte Schnittstelle 20 und das Telekommunikationsnetz 10 an das Endgerät 5.

Eine von der zweiten Zentrale 2 über die zweite Schnittstelle 12 an der Anpassungsvorrichtung 15 empfangene SMS-Nachricht wird von der Steuerung 30 als solche erkannt und muß daher nicht umgewandelt werden, sondern kann in dem beschriebenen Pull-Modus nach Aufforderung durch das Endgerät 5 über die vierte Schnittstelle 20 und das Telekommunikationsnetz 10 an das Endgerät 5 übertragen werden.

In entsprechender Weise kann die Steuerung 30 Nachrichten, die vom Endgerät 5 über das Telekommunikationsnetz 10 und die vierte Schnittstelle 20 an der Anpassungsvorrichtung 15 empfangen wurden, erkennen und gemäß einer Vorgabe der von dieser Nachricht adressierten Zentrale in ein von dieser Zentrale gewünschtes Format umwandeln und an diese Zentrale übertragen werden, z.B. Text auf Voice-Mail-Box oder Text auf Fax. Die von der entsprechenden Zentrale gemachten Vorgaben können dabei ebenfalls in der Speichervorrichtung 25 abgespeichert sein. Dort können auch Vorgaben mehrerer Zentralen abgespeichert sein.

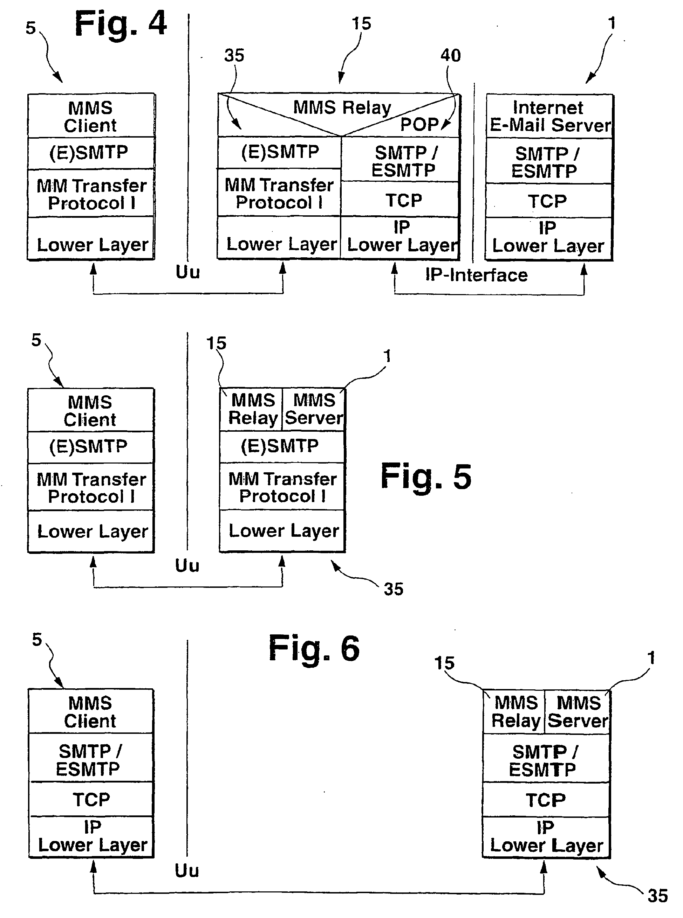

Im folgenden wird die Erfindung anhand von Figur 3 auf Protokollebene dargestellt und näher beschrieben. Das Endgerät 5 wird dabei auch als MMS-Client (Multimedia Message Service) bezeichnet. Die Anpassungsvorrichtung 15 wird gemäß Figur 3 und wie beschrieben auch als MMS-Relay bezeichnet. An die Anpassungsvorrichtung 15 soll beispielhaft in Figur 3 die erste Zentrale 1 angeschlossen sein, die auch als MMS-Server bezeichnet wird. Die vierte Schnittstelle 20 als Luftschnittstelle zwischen dem Endgerät 5 und der Anpassungsvorrichtung 15 ist in Figur 3 mit Uᵤ bezeichnet. Die erste Schnittstelle 11 zum Anschluß der ersten Zentrale 1 an die Anpassungsvorrichtung 15 ist in Figur 3 als IP-Interface (Internet Protocol) bezeichnet. Die Anpassungsvorrichtung 15 und die erste Zentrale 1, die stellvertretend für alle an die Anpassungsvorrichtung 15 angeschlossenen Zentralen in diesem Beispiel gewählt wurde, bilden dabei das beschriebene MMSE.

Der MMS-Server und das MMS-Relay 15 müssen nicht notwendigerweise wie in Figur 3 dargestellt voneinander getrennt sein, sondern können auch eine physikalische Einheit bilden. Eine Trennung von MMS-Relay 15 und MMS-Server gemäß Figur 3 bzw. eine verteilte Anordnung der beiden Elemente ist besonders sinnvoll, wenn es sich beim MMS-Server um einen Internet-E-Mail-Server handelt. In diesem Fall sind das MMS-Relay 15 und der MMS-Server über die üblichen Protokollschichten miteinander verbunden. Dabei umfaßt das MMS-Relay 15 auf der Seite der Luftschnittstelle Uᵤ eine erste Protokollschichtenfolge, die der Protokollschichtenfolge des Endgerätes 5 entspricht. Weiterhin umfaßt das MMS-Relay 15 eine zweite Protokollschichtenfolge auf der Seite des IP-Interface, die der Protokollschichtenfolge der ersten Zentrale 1 entspricht. Mit MM-Transfer-Protocol (Multimedia Messaging) wird dabei allgemein eine obere Protokollschicht bezeichnet, die beispielsweise als SMTP oder als ESMTP oder auch herstellerspezifisch ausgebildet sein kann. Dabei kann sich das MM-Transfer-Protocol auf der Seite der Luftschnittstelle Uᵤ vom MM-Transfer-Protocol auf der Seite des IP-Interface unterscheiden. Das MM-Transfer-Protocol auf der Seite der Luftschnittstelle Uᵤ ist daher in Figur 3 mit I und das MM-Transfer-Protocol auf Seiten des IP-Interface ist mit II gekennzeichnet, um diesem Umstand Rechnung zu tragen. Dabei kann beispielsweise das MM-Transfer-Protocol II als SMTP und das MM-Transfer-Protocol I als Protokoll für die Übertragung von SMS-Nachrichten ausgebildet sein, um die in Figur 2 beschriebene Anwendung zu realisieren. Die obere Schicht ist auf Seiten des IP-Interface unterteilt in das MM-Transfer-Protocol II und das TCP/UDP (Transmission Control Protocol/User Datagram Protocol). Die untere Schicht wird allgemein als Lower Layer bezeichnet, dient dem Aufbau und Einrichten einer Verbindung zwischen Anpassungsvorrichtung 15 und Endgerät 5 einerseits sowie zwischen Anpassungsvorrichtung 15 und entsprechender Zentrale andererseits und ist ebenfalls an den Typ der über die entsprechende Schnittstelle zu übertragenden Nachrichten angepaßt. So ist beispielsweise die dem IP-Interface zugehörige untere Schicht gemäß Figur 3 als IP (Internet Protocol) und darunterliegende Lower Layer Schicht ausgebildet.

Das MMS-Relay 15 führt dabei eine Anpassung des Nachrichtenaustauschs zwischen dem MMS-Server und dem MMS-Client durch. Dabei werden für eine Nachricht, die vom MMS-Server zum MMS-Client gesendet werden soll, die dem IP-Interface zugeordnete zweite Protokollschichtenfolge 40 des MMS-Relay 15 von unten nach oben durchlaufen. Anschließend findet eine Umformung der Nachricht gemäß der Vorgabe des Endgerätes 5 im MMS-Relay 15 statt. Daraufhin durchläuft die so umgeformte Nachricht, die der Luftschnittstelle Uᵤ zugeordnete erste Protokollschichtenfolge 35 des MMS-Relay 15 von oben nach unten, so daß die Nachricht an den MMS-Client abgesandt werden kann. Entsprechend umgekehrt verläuft die Protokoll- und Nachrichtenumwandlung für Nachrichten, die vom MMS-Client über das MMS-Relay 15 zum MMS-Server übertragen werden sollen. Die Protokollschichtfolge der zweiten Zentrale 2 und der dritten Zentrale 3 können sich jeweils von der Protokollschichtenfolge der ersten Zentrale 1 gemäß Figur 3 unterscheiden, wobei der zweiten Schnittstelle 12 und der dritten Schnittstelle 13 auf Seiten des MMS-Relays 15 dann jeweils eine eigene zweite Protokollschichtenfolge 40 zugeordnet ist, die der Protokollschichtenfolge der angeschlossenen Zentrale entspricht. Auf diese Weise können durch die erste Schnittstelle 11, die zweite Schnittstelle 12 und die dritte Schnittstelle 13 drei verschiedene Protokollschichtenfolgen auf Seiten des MMS-Relays 15 realisiert werden, die jeweils der Protokollschichtenfolge der angeschlossenen Zentrale entsprechen. Wesentlich bei der gemäß Figur 3 beschriebenen Anordnung ist es, daß der MMS-Client über das MMS-Relay 15 mit einem oder mehreren MMS-Servern kommuniziert und umgekehrt. Die dargestellte Struktur erlaubt dabei einerseits eine flexible Integration mehrerer unterschiedlicher MMS-Server oder Zentralen aus verschiedenen Netzen bzw. für verschiedene Dienste, wie z.B. einem Fax-Mail-Dienst oder einem Voice-Mail-Dienst, die über ein zellulares Mobilfunknetz realisiert werden, und einem E-Mail-Dienst, der über das Internet realisiert wird. Durch die Anpassungsvorrichtung 15 können dem Endgerät 5, falls es als Mobilfunkgerät beispielsweise nach dem GSM-Standard ausgebildet ist, zusätzlich zur Realisierung mobilfunkspezifischer Funktionen, wie z.B. dem SMS-Dienst die Verwendung von standardisierten Maildiensten, beispielsweise nach dem Internet-Standard der IETF mit den dafür erforderlichen Protokollen, Verfahren und MMS-Servern angeboten werden.

Die durch das MMS-Relay 15 auszuführenden Funktionen lassen sich in mehrere Gruppen einteilen. Eine erste Gruppe solcher Funktionen ermöglicht die Integration unterschiedlicher Dienste bzw. unterschiedlicher MMS-Server durch die Anpassungsvorrichtung 15. Die MMS-Server unterschiedlicher Dienste, wie z.B. E-Mail, Voice-Mail oder Fax-Mail senden ihre Nachrichten über das MMS-Relay 15, das diese Nachrichten in eine einheitliche Form umsetzt, zum Endgerät 5. Hierbei kann es notwendig sein, daß unterschiedliche Datenformate konvertiert werden müssen, z.B. ein Fax-Mail-Format in ein Grafikformat. Es kann aber zusätzlich oder alternativ auch erforderlich sein, den Datentyp einer solchen Nachricht zu konvertieren, beispielsweise eine Textnachricht in eine Voice-Mail-Nachricht umzusetzen, damit die Textnachricht akustisch am Endgerät 5 wiedergegeben werden kann.

Eine zweite Gruppe von Funktionen im MMS-Relay 15 ist dazu notwendig, um festzustellen, ob das Endgerät 5 durch das Telekommunikationsnetz 10 von der Anpassungsvorrichtung 15 erreicht werden kann. Hierzu ist es notwendig, daß das MMS-Relay 15 eine Verbindung zu einem weiteren Nachrichtenelement, beispielsweise einem HLR (Home Location Register) hat, um Informationen darüber zu erhalten, ob das Endgerät 5 im Telekommunikationsnetz 10 angemeldet bzw. verfügbar ist. Ist das entsprechende Endgerät 5 nicht erreichbar, so muß die zu übermittelnde Nachricht in der Speichervorrichtung 25 gespeichert werden. Sobald das Endgerät 5 wieder erreichbar wird und das MMS-Relay 15 dies über das beschriebene Netzwerkelement erfährt, so führt das MMS-Relay 15 den zuvor durch Speicherung der Nachricht abgebrochenen Übermittlungsprozeß automatisch fort.

Eine dritte Gruppe von Funktionen betrifft den einzustellenden Übertragungsmodus für die Übertragung der Nachrichten von der Anpassungsvorrichtung 15 zum Endgerät 5. Dabei soll es möglich sein, zum einen direkt Nachrichten von der Anpassungsvorrichtung 15 zum Endgerät 5 gemäß dem Push-Modus zu übertragen. Zum anderen soll es möglich sein, daß das Endgerät 5 lediglich von der Anpassungsvorrichtung 15 darüber informiert wird, daß für das Endgerät 5 eine Nachricht in der Anpassungsvorrichtung 15 oder einer der zugeordneten Zentralen 1, 2, 3 abgelegt ist. Diese Nachrichten können dann am Endgerät 5 über die Anpassungsvorrichtung 15 abgerufen oder an ein anderes Mailsystem weitergeleitet werden. Dieser Übertragungsmodus entspricht dem beschriebenen Pull-Modus. Welcher Übertragungsmodus für welche Nachricht bzw. für welchen Datentyp von Nachricht angewendet wird, kann der Benutzer des Endgerätes 5 mittels eines Datensatzes vorgeben und diesen Datensatz an die Anpassungsvorrichtung 15 zur Speicherung in der Speichervorrichtung 25 absenden. Ein solcher Datensatz wird auch als Profile bezeichnet. Erkennt das MMS-Relay 15 das Eingehen einer neuen Nachricht für das Endgerät 5 in einer der Zentralen 1, 2, 3 oder wird es dem MMS-Relay 15 durch eine der Zentralen 1, 2, 3 signalisiert, dann überprüft das MMS-Relay 15 in Abhängigkeit der in der Speichervorrichtung 25 abgelegten Profile-Einträge, in welchem Übertragungsmodus die Nachricht zum Endgerät 5 übertragen werden soll, also beispielsweise im Push-Modus oder im Pull-Modus. Entsprechend dem vorgegebenen Übertragungsmodus wird dann die Übertragung der Nachricht zum Endgerät 5 durch die Steuerung 30 gesteuert.

Eine weitere Gruppe von Funktionen der Anpassungsvorrichtung 15 betrifft die Segmentierung oder das Zusammenfassen von Nachrichten. Nachrichten können aus mehreren Elementen bestehen, wie beispielsweise E-Mails, die unterschiedliche Anhänge beinhalten können. Das MMS-Relay 15 kann jedes Element einer Nachricht individuell behandeln, d.h. unter Umständen einzelne Elemente der Nachricht an das Endgerät 5 weiterleiten, andere in der Speichervorrichtung 25 speichern, wieder andere löschen oder an ein anderes Mailsystem weiterleiten. Dieses Verfahren wird als Segmentierung von Nachrichten bezeichnet. Entsprechend kann eine Nachricht neu zusammengefaßt werden, beispielsweise aus Nachrichtenelementen von unterschiedlichen Zentralen 1, 2, 3. Dabei können beispielsweise alle neu in den Zentralen 1, 2, 3 eingegangenen Elemente, die zum Endgerät 5 im Push-Modus und alle in den Zentralen 1, 2, 3 eingegangenen Nachrichtenelemente die im Pull-Modus zum Endgerät 5 übertragen werden sollen zu jeweils einer Nachricht zusammengefaßt und im entsprechenden Übertragungsmodus zum Endgerät 5 übertragen werden. Auch können sämtliche Nachrichtenelemente, die an dieselbe Adresse, beispielsweise in einem anderen Mailsystem weitergeleitet werden sollen, zu einer einzigen Nachricht zusammengefaßt und an dieses Mailsystem weitergeleitet werden. Ob nun Nachrichten von verschiedenen Zentralen zu einer gemeinsamen Nachricht zusammengefaßt werden sollen, wenn sie mit dem gleichen Übertragungsmodus zum Endgerät 5 übertragen werden sollen, kann ebenfalls in einem benutzerdefinierten Profile vorgegeben sein. Dasselbe gilt für die Segmentierung einer Nachricht aus mehreren Nachrichtenelementen, die von einer einzigen Zentrale für das Endgerät 5 empfangen wurde. Dabei kann es vom Benutzer des Endgerätes 5 mittels eines Profiles vorgegeben sein, welche Datentypen oder Datenformate von Nachrichtenelementen einer solchen Nachricht in welcher der beschriebenen Formen individuell behandelt werden sollen. Beispielsweise könnten sämtliche Nachrichtenelemente in einem Videoformat an ein anderes Endgerät in einem anderen Mailsystem weitergeleitet werden, das in der Lage ist, die Videodaten wiederzugeben. Nachrichtenelemente mit Textnachrichten können in diesem Beispiel für das Versenden an das Endgerät 5 gemäß Profile vorgesehen sein und Nachrichtenelemente in Faxform könnten gemäß Profile in diesem Beispiel zum Speichern in der Speichervorrichtung 25 für einen späteren Abruf vorgesehen sein.

Eine für das Endgerät 5 in entsprechender Weise beispielsweise in der ersten Zentrale 1 eingehende Nachricht mit solchen Anhängen oder Nachrichtenelementen wird dann gemäß den Vorgaben im benutzerdefinierten Profile, das in der Speichervorrichtung 25 abgespeichert ist, segmentiert, um die einzelnen Nachrichtenelemente dieser Nachricht entsprechend den Vorgaben des Profiles wie beschrieben verarbeiten zu können.

Ganz allgemein ist das benutzerdefinierte Profile ein Datensatz, der durch den Benutzer des Endgerätes 5 festgelegt wird und in der Speichervorrichtung 25 des MMS-Relays 15 gespeichert wird. Er bestimmt das Verhalten des MMS-Relays 15 und gibt vor, welche Nachrichten oder Nachrichtenelemente direkt bzw. nach Abruf, d.h. im Push- oder im Pull-Modus, an das Endgerät 5 übertragen werden, welche Nachrichten oder Nachrichtenelemente automatisch an ein anderes Mailsystem weitergeleitet oder gelöscht werden, welche Nachrichten oder Nachrichtenelemente in ein anderes Format konvertiert werden, usw. Um die für die Nachrichten oder die Nachrichtenelemente mittels Profile vorgesehenen Verarbeitungen vornehmen zu können, müssen diese Nachrichten oder Nachrichtenelemente voneinander unterschieden und identifiziert werden können. Unterscheidungsmerkmale zur Identifikation der Nachrichten oder Nachrichtenelemente sind beispielsweise der Datentyp, also z.B. Fax-Mail, Voice-Mail, E-Mail, SMS, usw. und die Größe der Nachrichten oder der Nachrichtenelemente. Datentyp und Größe der Nachrichten oder Nachrichtenelemente können dabei von der Steuerung 30 auf geeignete und dem Fachmann bekannte Art und Weise, bspw. durch Auswertung einer den Nachrichten oder den Nachrichtenelementen beigefügten Kopfinformation mit den nötigen Angaben ermittelt werden. Das Profile kann auch endgerätespezifische Vorgaben enthalten, die nicht vom Benutzer beeinflußbar sind und die dem Endgerät 5 zur Verfügung stehenden Ressourcen, z.B. die Grafikfähigkeit einer Anzeigevorrichtung des Endgerätes 5, die Speicherkapazität des Endgerätes 5 oder dergleichen als Randbedingungen vorgeben. Es kann jedoch auch vorgesehen sein, daß der Benutzer selbst vorgibt, welche mit dem Endgerät 5 realisierbare Funktionalitäten in das Profile aufgenommen werden. Aus der Veröffentlichung "Composite Capability/Preference Profiles (CC/PP): A user side framework for content negotiation", W3C Note, 27. Juli 1999 ist es bereits bekannt, wie ein Benutzer sein Profil festlegen und verändern kann.

Es können auch mehrere solcher Profiles exisitieren, um beispielsweise Fähigkeiten unterschiedlicher Anzeigevorrichtungen des Endgerätes 5 oder Fähigkeiten unterschiedlicher Endgerätekonfigurationen allgemein zu berücksichtigen, die sich dadurch ergeben können, daß an das Endgerät 5 externe Komponenten, wie beispielsweise eigene Anzeigevorrichtungen, anschließbar sind. Eine solche externe Komponente kann beispielsweise ein Laptop sein.

Die Einstellungen für das aktuelle Profile hängen in der Regel von den Funktionalitäten des Endgeräts 5 ab, welche dem Benutzer aktuell zur Verfügung stehen. Mehr noch als heute wird ein mobiler Benutzer in Zukunft externe Geräte mit seinem beispielsweise als Mobiltelefon oder Mobilfunkgerät ausgebildeten mobilen Endgerät 5 verbinden können, um so die aktuellen mittels des Endgerätes 5 realisierbaren Leistungsfähigkeiten je nach Bedarf oder Angebot zu variieren. Aus Gründen der Mobilität, der Gerätegröße und der Stand-by-Zeit werden viele Mobilfunkgeräte auch in Zukunft nur grundlegende Funktionalitäten bieten. Diese Funktionalitäten kann der Benutzer jedoch erweitern, indem er zum Beispiel ein elektronisches Notizbuch oder einen elektronischen Organisator mit dem mobilen Endgerät 5 verkoppelt.

Will der Benutzer des Endgerätes 5 Änderungen am aktuellen Profile vornehmen, bietet die genannte Veröffentlichung "Composite Capability/Preference Profiles (CC/PP): A user side framework for content negotiation" eine Bandbreiteneffiziente Lösung hierzu an. Über das Telekommunikationsnetz 10, das in diesem Beispiel als Mobilfunknetz ausgebildet sein soll, überträgt das mobile Endgerät 5 lediglich die Änderungen gegenüber dem vorigen Profile zur Speichervorrichtung 25, die auch als Profile Database bezeichnet wird und auch außerhalb der Anpassungsvorrichtung 15 in Verbindung mit und Zuordnung zu dieser angeordnet sein kann. Die Speichervorrichtung 25 kann jedoch auch wie in Figur 2 dargestellt in der Anpassungsvorrichtung 15 angeordnet sein. Es muß also nicht das vollständige aktuelle Profile übertragen werden. Nichtsdestotrotz müssen bei einer Änderung der zur Verfügung stehenden Funktionalitäten des Endgerätes 5 beispielsweise aufgrund des Anschlusses eines anderen Geräts an das Endgerät 5 zumindest die sich im Vergleich zum vorherigen Profile ändernden Profile-Daten an die Anpassungsvorrichtung 15 übermittelt werden.

Erfindungsgemäß wird daher vorgeschlagen, einem Benutzer des Endgeräts 5 mehrere oder beliebig viele unterschiedliche Profiles zu erlauben. Je nachdem, welche externen Geräte der Benutzer an sein mobiles Endgerät 5 anschließt, das heißt je nachdem welche Funktionalitäten ihm aktuell zur Verfügung stehen, soll er dann ein geeignetes Profile aus einer Liste seiner Profiles auswählen können.

Hierzu wird die Liste mit den unterschiedlichen Profiles in der Profile Database 25 gespeichert. In jedem dieser Profiles legt der Benutzer fest, welche Funktionalitäten ihm zur Verfügung stehen und welche Eigenschaften der MMS-Service bei diesem Profile haben soll.

Jedem dieser Profiles kann der Benutzer einen möglichst eindeutigen und aussagekräftigen Profile-Namen geben. Zwischen dem mobilen Endgerät 5 und der Profile Database 25 werden zusätzlich Kennungen, beispielsweise in Form von Zahlen, für jedes dieser Profiles vereinbart, so daß eine eineindeutige Abbildung einer Kennung auf einen Profile-Namen eines jeden Profile und somit auf den Inhalt des entsprechenden Profile möglich ist.

Eine einfache Art und Weise, zwischen dem mobilen Endgerät 5 und der Profile Database 25 solche Kennungen zu vereinbaren ist es beispielsweise, sie in der Reihenfolge des Ablegens in der Profile Database 25 zu numerieren. Sämtliche vom Benutzer des mobilen Endgerätes 5 vorgegebene Profiles werden in einer Initialisierungsphase vom Endgerät 5 über das Telekommunikationsnetz 10 zur Anpassungsvorrichtung 15 beziehungsweise zur Profile Database 25 übertragen und in der Profile Database 25 beispielsweise in der Reihenfolge ihres Eintreffens abgespeichert. Weitere vom Benutzer definierte beziehungsweise vorgegebene Profiles können auch noch zu einem späteren Zeitpunkt vom Endgerät 5 in der beschriebenen Weise zur Profile Database 25 übertragen und dort beispielsweise in der Reihenfolge ihres Eintreffens gespeichert werden.

So kann der Benutzer eines als GSM-Mobilfunkgerät ausgebildeten Endgerätes 5 beispielsweise ein erstes Profile festlegen, welchem er den Namen "pure GSM (SMS only)" gibt. In diesem Profile wird er dann festlegen, daß sein GSM-Mobilfunkgerät 5 lediglich SMS unterstützt und er deswegen für ihn bei einem Internet-E-Mail Server vorliegende E-mails nicht automatisch zugeschickt bekommen möchte, sondern in diesem Fall lieber auf dem Internet-E-Mail Server belassen möchte. Dasselbe gilt für andere von SMS-Nachrichten verschiedenen für den Benutzer vorliegende Nachrichten, die ebenfalls in den entsprechenden Servern gespeichert bleiben sollen.

Ein zweites Profile kann er für den Fall anlegen, daß er einen elektronischen Organisator an sein GSM-Mobilfunkgerät 5 anschließt. Auf dem Organisator hat er nun zusätzlich eine Kalenderfunktionalität, welche per GSM-Datenruf über das Mobilfunknetz 10 und das MMS-Relay 15 auf einen in Figur 2 nicht dargestellten Organisator-Server zugreifen kann. Generell können beliebig viele Server beziehungsweise Zentralen in der gemäß Figur 2 beschriebenen Weise an die Anpassungsvorrichtung 15 angeschlossen sein. In diesem Fall kann der Benutzer im zweiten Profile mit der beispielhaft gewählten Bezeichnung "GSM + Organisator" z.B. festlegen, daß nicht nur SMS-Nachrichten an ihn geschickt werden sollen, sondern daß der Benutzer auch automatisch Updates seines Kalenders bekommt - wenn z.B. seine Sekretärin oder Arbeitskollegen einen Termin ändern, hinzufügen oder streichen. Nachrichten anderer Nachrichtenarten, die von den genannten Nachrichtenarten verschieden sind, sollen gemäß dem zweiten Profile ebenfalls auf dem zugehörigen Server gespeichert bleiben.

Ein drittes Profile kann er für den Fall anlegen, daß er ein elektronisches Notizbuch an sein GSM-Mobilfunkgerät 5 anschließt. Auf dem elektronischen Notizbuch hat er nun vielerlei Möglichkeiten oder Anwendungen. Deswegen stellt er im dritten Profile, das er z.B. "GSM + Notizbuch" nennt, folgendes ein: Mit dem so erweiterten mobilen Endgerät 5 lassen sich nicht nur SMS und Kalender-Funktionalitäten realisieren, sondern z.B. auch E-mail und Fax. Da ihm in der Regel per Fax nur dringende und wichtige Informationen geschickt werden, er via E-mail aber jegliche Art von Nachrichten bekommt, legt er z.B. im Profile 3 fest, daß Nachrichten im SMS-, Kalender- und Fax-Format automatisch an ihn gesendet werden sollen, E-mails aber auf dem Internet-E-Mail Server verbleiben sollen. Nachrichten anderer Nachrichtenarten, die von den genannten Nachrichtenarten verschieden sind, sollen ebenfalls auf dem zugehörigen Server gespeichert bleiben.

In einem vierten Profile wird der Benutzer des mobilen Endgerätes 5 dann z.B. den Fall berücksichtigen, daß er nicht im Bereich seines Heimatnetzes unterwegs ist, sondern sich z.B. im Ausland aufhält. In einem solchen Fall sind ihm die anfallenden Roaming-Gebühren zu hoch, so daß er zwar SMS-Nachrichten weiter empfangen möchte, über eingehende Kalender-Nachrichten oder Faxe jedoch lediglich per SMS informiert werden möchte - ohne daß ihm diese automatisch zugestellt werden. E-Mails und Nachrichten anderer Nachrichtenarten, die von den genannten Nachrichtenarten verschieden sind, sollen ebenfalls auf dem zugehörigen Server gespeichert bleiben.

Zu Beginn einer Nutzung des MMS-Service braucht der Benutzer gemäß dieser Erfindung dann nur noch jenes Profile aus einer Liste mit den Profile-Namen, die im mobilen Endgerät 5 gespeichert sind, auszuwählen, das seinen Wünschen entspricht und den aktuellen Funktionalitäten des mobilen Endgeräts 5 beziehungsweise der mit ihm gerade verbundenen externen Zusatzgeräte oder Komponenten enspricht. Im mobilen Endgerät 5 wird diese Auswahl, dieser Profile-Name dann auf die entsprechende Kennung abgebildet. Diese Kennung ist dann das einzige, was wirklich über die Luftschnittstelle beziehungsweise das Mobilfunknetz 10 vom mobilen Endgerät 5 an das MMS-Relay 15 übertragen werden muß, um den MMS-Service wie gewünscht zu starten. Denn über diese Kennung kann das MMS-Relay 15 in der Profile Database 25 die Einstellungen für das der Kennung zugeordnete Profile erfragen und realisieren.

Ein Vorteil der Erfindung besteht insbesondere darin, daß der Benutzer nur ein einziges Mal die Fähigkeiten seines Endgeräts 5 bzw. seiner möglichen Gerätekombination in Form von an das Endgerät 5 angeschlossenen externen Zusatzgeräten oder Komponenten, und seine Wunsch-Konfiguration des MMS-Service einstellen muß bzw. vom MMS-Relay 15 an der Profile Database 25 einstellen lassen kann. Ändert sich etwas an der Gerätekombination und/oder seinen Wünschen, so braucht er lediglich das passende Profile aus der Liste auszuwählen.

Ein weiterer Vorteil ergibt sich durch die jeweilige Kennung der Profiles. Wie oben erläutert, muß gemäß dieser Erfindung nicht die Differenz-Information zum vorherigen Profile über die Luftschnittstelle übertragen werden, sondern es wird lediglich die Kennung des gewünschten Profile übertragen. Dies spart Daten und somit Ressourcen auf dem Mobilfunkkanal im Mobilfunknetz 10 und beschleunigt das Einstellen des MMS-Service.

Im MMS-Relay 15 werden wie beschrieben auch Datentyp- und/oder Datenformatkonvertierungen durchgeführt. In Abhängigkeit der Vorgaben des benutzerdefinierten Profiles bzw. von endgerätespezifischen Standardvorgaben werden dabei Nachrichten oder Nachrichtenelemente, die in einer der Zentralen 1, 2, 3 für das Endgerät 5 in einem ersten Datentyp, z.B. als Fax-Mail oder als Text vorliegen, in einen anderen Datentyp umgewandelt, beispielsweise ein Fax-Mail in eine Grafik oder ein Text in Sprache. Entsprechend kann eine in einem ersten Datenformat vorliegende Nachricht durch das MMS-Relay 15 in ein zweites Datenformat konvertiert werden. Beispielsweise kann eine GIF-Grafik (Graphic Interchange Format) in eine JPEG-Grafik (Joint Picture Expert Group) oder ein Text eines ersten Alphabets in einen Text eines zweiten Alphabets konvertiert werden.

Es kann vorgesehen sein, daß das MMS-Relay 15 das Endgerät 5 benachrichtigt, wenn neue Nachrichten oder Nachrichtenelemente nicht automatisch zum Endgerät 5 weitergeleitet werden, beispielsweise gemäß dem Pull-Modus. Entsprechend kann eine Benachrichtigung des Endgerätes 5 durch das MMS-Relay 15 erfolgen, wenn Nachrichten oder Nachrichtenelemente automatisch je nach Vorgabe des oder der Profiles an ein anderes Mailsystem weitergeleitet oder gelöscht werden.

Das MM-Transfer-Protocol I zwischen MMS-Relay 15 und MMS-Client muß neben den Funktionen zur Übertragung der Nachricht von der Anpassungsvorrichtung 15 zum Endgerät 5 drei wesentliche Funktionselemente beinhalten:
1.) die Möglichkeit, vom MMS-Relay 15 zum Endgerät 5 eine Verbindung aufzubauen, um den Push-Modus zu realisieren.
2.) die Möglichkeit, vom MMS-Relay 15 zum Endgerät 5 eine Signalisierung herzustellen, um das Endgerät 5 über eine in einer der Zentralen 1, 2, 3 vorliegende Nachricht zu benachrichtigen, um den Pull-Modus zu realisieren.
3.) die Möglichkeit, vom Endgerät 5 zum MMS-Relay 15 eine Verbindung aufzubauen, um eine für das Endgerät 5 in einer der Zentralen 1, 2, 3 abgelegte Nachricht abzurufen und somit den Pull-Modus zu vervollständigen oder Nachrichten zu versenden.

Im folgenden wird die Erfindung anhand dreier verschiedener Ausführungsformen erläutert. In Figur 4 sind ausgehend von Figur 3 Schichtenfolgen für ein konkretes Beispiel dargestellt, bei dem der MMS-Server als Internet E-Mail-Server ausgebildet ist und die erste Zentrale 1 darstellt. Das MM-Transfer-Protocol II ist dabei als SMTP oder als ESMTP ausgebildet. Dem MM-Transfer-Protocol I ist in Zuordnung zur Luftschnittstelle Uᵤ das SMTP oder das ESMTP übergeordnet. Die restlichen Schichten entsprechen den bereits in Figur 3 dargestellten Schichten. Das Endgerät 5 ist ein SMTP- oder ESMTP-fähiges Endgerät. Bei dem in Figur 4 dargestellten Internet E-Mail-Server handelt es sich um einen Internet E-Mail-POP-Server (Post Office Protocol). Der MMS-Client gemäß Figur 4 ist in diesem Beispiel als SMTP-Client, d.h. SMTP-fähiges Endgerät 5 ausgebildet. Die Verbindung vom MMS-Relay 15 zum Internet E-Mail-POP-Server ist identisch mit einer klassischen Internet E-Mail Konfiguration, bei der ein POP-Server alle für den POP-Client eingehenden E-Mails speichert und der POP-Client in regelmäßigen Zyklen nachprüft, ob für ihn neue Mails beim POP-Server eingegangen sind. Ist dies der Fall, so werden diese komplett in den POP-Client geladen, wobei bei der klassischen Internet E-Mail-Konfiguration kein MMS-Relay 15 vorgesehen ist. Als Übertragungsprotokoll ist das SMTP vorgesehen, das, wie beschrieben, zumindest für das IP-Interface, das TCP/IP (Transmission Control Protocol/Internet Protocol) benutzt.

Bei der ersten Ausführungsform nach Figur 4 beinhaltet das MMS-Relay 15 für das IP-Interface die beschriebene POP-Client-Funktionalität gemäß der klassischen Internet E-Mail-Konfiguration. Eine neue E-Mail auf dem Internet E-Mail-POP-Server wird somit in der für den klassischen POP-Client beschriebenen Weise zum MMS-Relay 15 übertragen. Das MMS-Relay 15 legt dann in Abhängigkeit der in der Speichervorrichtung 25 abgelegten Profileeinträge fest, ob diese E-Mail oder welche Elemente dieser E-Mail direkt zum Endgerät 5 mittels Push-Modus weitergeleitet werden und signalisiert dem Endgerät 5 ggf. zusätzlich, daß noch weitere Elemente dieser Nachricht zum Übertragen an das Endgerät 5 gemäß dem Pull-Modus vorhanden sind oder an ein anderes Mailsystem weitergeleitet oder gelöscht wurden. Wird kein Element der E-Mail zum Endgerät 5 gemäß dem Push-Modus übertragen, so findet nur eine Benachrichtigung in einer der beschriebenen Formen statt. Beispielhaft soll nun die E-Mail Elemente für beide Übertragungsmodi, also für den Push-Modus und den Pull-Modus enthalten. Hierbei faßt das MMS-Relay 15 die gemäß dem Profile für den Push-Modus vorgesehenen Elemente zu einer neuen Nachricht zusammen, baut einen Übertragungskanal zum Endgerät 5 auf und sendet diese zusammengefaßten Elemente mittels SMTP. Die anderen Elemente werden ebenfalls zusammengefaßt und mittels SMTP zum Internet E-Mail-Server übertragen, um von dort an ein anderes Mailsystem weitergeleitet, gelöscht oder für den Pull-Modus bis zum Abruf durch das Endgerät 5 gespeichert zu werden. Die Benachrichtigung über das Vorhandensein von Nachrichtenelementen, die für den Pull-Modus vorgesehen sind, kann zusammen mit der Übertragung der zusammengefaßten Nachrichtenelemente gemäß dem Push-Modus erfolgen oder auch separat. Findet nur eine Benachrichtigung statt, d.h. sind keine Nachrichtenelemente vorhanden, die gemäß dem Push-Modus zum Endgerät 5 übertragen werden müssen, so könnte diese Benachrichtigung mittels einer vom MMS-Relay 15 generierten Nachricht erfolgen, die im Push-Modus an das Endgerät 5 übermittelt wird oder spezielle Signalisierungskanäle verwendet, wie beispielsweise den SMS-Dienst nach GSM-Standard.

Ist das Endgerät 5 über das Telekommunikationsnetz 10 nicht erreichbar, so werden auch die Nachrichtenelemente bspw. in der Speichervorrichtung 25 des MMS-Relays 15 gespeichert, die gemäß dem Push-Modus an das Endgerät 5 zu übertragen sind. Entsprechend werden Benachrichtigungen beispielsweise in der Speichervorrichtung 25 des MMS-Relays 15 zwischengespeichert, die vom MMS-Relay 15 zum Endgerät 5 bezüglich von Nachrichtenelementen übertragen werden müssen, die nicht gemäß dem Push-Modus zu übertragen sind. Die Speicherung der Nachrichtenelemente, die gemäß dem Push-Modus zu übertragen sind und/oder der Benachrichtigungen dauert solange an, bis dem MMS-Relay 15 beispielsweise vom HLR mitgeteilt wird, daß das Endgerät 5 nun über das Telekommunikationsnetz 10 erreichbar ist. Anschließend wird die Übermittlung der Nachrichtenelemente gemäß dem Push-Modus bzw. der Benachrichtigungen zum Endgerät 5 fortgesetzt. Das Speichern der Nachrichtenelemente und/oder der Benachrichtigungen kann in diesem Beispiel im Internet E-Mail-Server oder im MMS-Relay 15 erfolgen.

Neben den Übertragungsmodi regelt das Profile wie beschrieben bspw. Konvertierungen des Datenformats von Nachrichten. Unterstützt das Endgerät 5 bspw. bei Grafiken nur das JPEG-Datenformat, so wird dies im Profile standardmäßig eingetragen und das MMS-Relay 15 konvertiert automatisch alle für das Endgerät 5 eingehenden Grafiknachrichtenelemente in das JPEG-Format.

Gemäß der ersten Ausführungsform wird exemplarisch das POP benutzt. Alternativ könnte auch das IMAP (Internet Message Access Protocol) oder andere für diesen Zweck verfügbare Protokolle verwendet werden.

Ausgehend von der ersten Ausführungsform nach Figur 4 zeigt Figur 5 eine zweite Ausführungsform, bei der der MMS-Server und das MMS-Relay 15 funktional zusammengefaßt sind, wie dies beispielsweise für netzinterne Dienste, wie Voice-/Fax-Mail-Box von Vorteil sein kann. Dargestellt ist dabei in Figur 5 die aus Figur 4 bekannte Protokollschichtenfolge des MMS-Client nach Figur 4 und die erste Protokollschichtenfolge 35 für die Luftschnittstelle Uᵤ des MMS-Relays 15 nach Figur 4. Diese Protokollschichtfolge teilen sich nun das MMS-Relay 15 und der MMS-Server in einer gemeinsamen physikalischen Einheit gemäß Figur 5.

Auch gemäß Figur 6 sind der MMS-Server und das MMS-Relay 15 funktional in einer physikalischen Einheit zusammengefaßt, jedoch eher für IP basierende Implementationen. Dabei entspricht der MMS-Server gemäß Figur 6 in seiner Protokollschichtenfolge dem Internet E-Mail-Server gemäß Figur 4. Diese Protokollschichtenfolge teilt sich der MMS-Server mit dem MMS-Relay 15. Dieselbe Protokollschichtenfolge wird dann, wie üblich, für den MMS-Client gemäß Figur 6 gewählt, wobei die Luftschnittstelle Uᵤ zwischen MMS-Client und MMS-Relay 15 bzw. MMS-Server gleichzeitig ein IP-Interface darstellt.

Figur 6 stellt dabei eine dritte Ausführungsform dar. Alle drei Ausführungsformen gemäß Figur 4, Figur 5 und Figur 6 sind im MMSE gemeinsam anwendbar.

Allen Implementationen gemein ist die einheitliche Servicefunktionalität aus Sicht des MMS-Clients, die durch das MMS-Relay 15 gewährleistet wird, wobei das MMS-Relay 15 entweder als separates Protokollelement oder funktional mit dem MMS-Server integriert ausgebildet ist.

An die vierte Schnittstelle 20 sind in der beschriebenen Weise nicht nur ein Endgerät, sondern mehrere Endgeräte anschließbar, so daß das MMS-Relay 15 in der beschriebenen Weise für mehrere Endgeräte gleichzeitig eingesetzt werden kann, wobei von jedem der angeschlossenen Endgeräte mindestens ein Profile in der beschriebenen Weise in der Speichervorrichtung 25 abgelegt sein kann.

## Patentansprüche

1. Verfahren zur Übertragung von Nachrichten zwischen mindestens einer Zentrale (1, 2, 3) und mindestens einem Endgerät (5) über ein Telekommunikationsnetz (10), wobei der Nachrichtenaustausch durch eine Anpassungsvorrichtung (15) zwischen der mindestens einen Zentrale (1, 2, 3) und dem Endgerät (5) in Abhängigkeit mindestens einer Vorgabe des Endgerätes (5) gesteuert wird, **dadurch gekennzeichnet, dass** die Anpassungsvorrichtung (15) von der mindestens einen Zentrale (1, 2, 3) bei einer für das Endgerät (5) eingehenden Nachricht benachrichtigt wird, dass von der Anpassungsvorrichtung (15) geprüft wird, ob das Endgerät (5) erreichbar ist, dass bei Erreichbarkeit ein Übermittlungsprozess für die Nachricht zum Endgerät (5) gemäß einem vom Endgerät (5) vorgegebenen Übertragungsmodus eingeleitet wird, wobei als Übertragungsmodus ein Push- oder ein Pull-Modus vom Endgerät (5) vorgegeben wird.

2. Verfahren nach Anspruch 1, **dadurch gekennzeichnet, dass** von der Anpassungsvorrichtung (15) mindestens eine Eigenschaft für die Übertragung der Nachricht an die mindestens eine Vorgabe des Endgerätes (5) angepasst wird.

3. Verfahren nach Anspruch 1 oder 2, **dadurch gekennzeichnet, dass** Nachrichten von verschiedenen Zentralen (1, 2, 3) von der Anpassungsvorrichtung (15) in eine einheitliche, vom Endgerät (5) lesbare Form umgesetzt und an das Endgerät (5) übertragen werden.

4. Verfahren nach einem der vorherigen Ansprüche, **dadurch gekennzeichnet, dass** je nach Vorgabe des Endgerätes (5) eine für das Endgerät (5) in der mindestens einen Zentrale (1, 2, 3) vorliegende Nachricht bei Erreichbarkeit des Endgerätes (5) an das Endgerät (5) von der Anpassungsvorrichtung (15) übermittelt wird oder die Verfügbarkeit dieser Nachricht dem Endgerät (5) von der Anpassungsvorrichtung (15) mitgeteilt wird.

5. Verfahren nach einem der vorherigen Ansprüche, **dadurch gekennzeichnet, dass** von der Anpassungsvorrichtung (15) mehrere Nachrichten zusammengefasst an das Endgerät (5) übertragen werden.

6. Verfahren nach einem der vorherigen Ansprüche, **dadurch gekennzeichnet, dass** von der Anpassungsvorrichtung (15) je nach Vorgabe des Endgerätes (5) einzelne Teile einer aus mehreren Elementen bestehenden Nachricht segmentiert und verarbeitet werden.

7. Verfahren nach einem der vorherigen Ansprüche, **dadurch gekennzeichnet, dass** die mindestens eine Vorgabe des Endgerätes (5) in Form eines Datensatzes von einem Benutzer des Endgerätes (5) vorgegeben und an die Anpassungsvorrichtung (15) übertragen wird.

8. Verfahren nach einem der vorherigen Ansprüche, **dadurch gekennzeichnet, dass** mehrere verschiedene Datensätze von einem Benutzer des Endgerätes (5) für verschiedene mit dem Endgerät (5) realisierbare Funktionalitäten vorgegeben und in einer der Anpassungsvorrichtung (15) zugeordneten Speichervorrichtung (25) abgelegt werden.

9. Verfahren nach Anspruch 8, **dadurch gekennzeichnet, dass** den verschiedenen Datensätzen jeweils eine Kennung zugeordnet wird.

10. Verfahren nach Anspruch 9, **dadurch gekennzeichnet, dass** vom Benutzer des Endgerätes (5) ein Datensatz ausgewählt wird, dass vom Endgerät (5) die den ausgewählten Datensatz kennzeichnende Kennung an die Anpassungsvorrichtung (15) übertragen wird, dass in der Anpassungsvorrichtung (15) geprüft wird, ob ein Datensatz mit der empfangenen Kennung in der Speichervorrichtung (25) abgelegt ist, und dass bei Vorliegen eines zur empfangenen Kennung gehörenden Datensatzes in der Speichervorrichtung (25) dieser Datensatz ausgewählt wird.

11. Verfahren nach Anspruch 9 oder 10, **dadurch gekennzeichnet, dass** die Datensätze in der Reihenfolge ihres Ablegens in der Speichervorrichtung (25) nummeriert werden, wobei die jeweilige Kennung der Datensätze aus dieser Nummerierung gebildet wird.

12. Verfahren nach einem der vorherigen Ansprüche, **dadurch gekennzeichnet, dass** im Endgerät (5) und in der Anpassungsvorrichtung (15) Protokolle verwendet werden, die Funktionselemente für den für die Übertragung einer Nachricht vorgegebenen Übertragungsmodus umfassen und eine geeignete Signalisierung von einer für das Endgerät (5) eingegangenen Nachricht am Endgerät (5) bewirken.

13. Verfahren nach einem der vorherigen Ansprüche, **dadurch gekennzeichnet, dass** bei Nichterreichbarkeit die Nachricht solange gespeichert wird, bis von der Anpassungsvorrichtung (15) eine Erreichbarkeit des Endgerätes (5) erkannt wird.

14. Anpassungsvorrichtung (15) zur Durchführung eines Verfahrens nach einem der vorherigen Ansprüche, wobei mindestens eine Schnittstelle (11, 12, 13) zu einer Zentrale (1, 2, 3) und eine Schnittstelle (20) zu einem Endgerät (5) vorgesehen ist, wobei eine Speichervorrichtung (25) vorgesehen ist zur Speicherung mindestens einer Vorgabe des Endgerätes (5) zur Steuerung des Nachrichtenaustauschs zwischen der mindestens einen Zentrale (1, 2, 3) und dem Endgerät (5) und wobei eine Steuerung (30) vorgesehen ist, die den Nachrichtenaustausch in Abhängigkeit der mindestens einen Vorgabe steuert, **dadurch gekennzeichnet, dass** die Anpassungsvorrichtung (15) so ausgelegt ist, dass sie von der mindestens einen Zentrale (1, 2, 3) eine Nachricht über eine für das Endgerät (5) eingehende Nachricht empfängt, dass die Anpassungsvorrichtung (15) so ausgelegt ist, dass sie prüft, ob das Endgerät (5) erreichbar ist und dass bei Erreichbarkeit ein Übermittlungsprozess für die Nachricht zum Endgerät (5) gemäß einem vom Endgerät (5) vorgegebenen Übertragungsmodus eingeleitet wird, wobei als Übertragungsmodus ein Push- oder ein Pull-Modus vom Endgerät (5) vorgegeben ist.

## Claims

1. Method for transmitting messages between at least one control centre (1, 2, 3) and at least one terminal (5) via a telecommunication network (10), where the message interchange is controlled by a matching apparatus (15) between the at least one control centre (1, 2, 3) and the terminal (5) on the basis of at least one stipulation from the terminal (5), **characterized in that** the matching apparatus (15) is notified by the at least one control centre (1, 2, 3) when a message arrives for the terminal (5), **in that** the matching apparatus (15) checks whether the terminal (5) can be reached, **in that** if it can be reached then a transmission process is started for the message to the terminal (5) in line with the transmission mode prescribed by the terminal (5), the transmission mode prescribed by the terminal (5) being a push mode or a pull mode.

2. Method according to Claim 1, **characterized in that** the matching apparatus (15) matches at least one property for the transmission of the message to the at least one stipulation from the terminal (5).

3. Method according to Claim 1 or 2, **characterized in that** messages from different control centres (1, 2, 3) are converted by the matching apparatus (15) into a standard form which can be read by the terminal (5) and are transmitted to the terminal (5).

4. Method according to one of the preceding claims, **characterized in that** depending on a stipulation from the terminal (5) a message available for the terminal (5) in the at least one control centre (1, 2, 3) is transmitted to the terminal (5) by the matching apparatus (15) if the terminal (5) can be reached, or the matching apparatus (15) notifies the terminal (5) of the availability of this message.

5. Method according to one of the preceding claims, **characterized in that** the matching apparatus (15) transmits a plurality of messages to the terminal (5) in combination.

6. Method according to one of the preceding claims, **characterized in that** the matching apparatus (15) segments and processes individual parts of a message comprising a plurality of elements depending on a stipulation from the terminal (5).

7. Method according to one of the preceding claims, **characterized in that** the at least one stipulation from the terminal (5) is prescribed by a user of the terminal (5) in the form of a data record and is transmitted to the matching apparatus (15).

8. Method according to one of the preceding claims, **characterized in that** a plurality of different data records are prescribed by a user of the terminal (5) for various functionalities which can be realized with the terminal (5) and are stored in a memory apparatus (25) associated with the matching apparatus (15).

9. Method according to Claim 8, **characterized in that** the various data records have a respective associated identifier.

10. Method according to Claim 9, **characterized in that** the user of the terminal (5) selects a data record, **in that** the terminal (5) transmits the identifier identifying the selected data record to the matching apparatus (15), **in that** the matching apparatus (15) checks whether a data record with the received identifier is stored in the memory apparatus (25), and **in that** if a data record associated with the received identifier is present in the memory apparatus (25) then this data record is selected.

11. Method according to Claim 9 or 10, **characterized in that** the data records are numbered in the order in which they are stored in the memory apparatus (25), with the respective identifier for the data records being formed from this numbering.

12. Method according to one of the preceding claims, **characterized in that** the terminal (5) and the matching apparatus (15) use protocols which comprise functional elements for the transmission mode prescribed for transmitting a message and prompt suitable signalling of a message which has arrived for the terminal (5) on the terminal (5).

13. Method according to one of the preceding claims, **characterized in that** if it is not possible to reach the terminal then the message is stored until the matching apparatus (15) recognizes that it is possible to reach the terminal (5).

14. Matching apparatus (15) for carrying out a method according to one of the preceding claims, where at least one interface (11, 12, 13) to a control centre (1, 2, 3) and an interface (20) to a terminal (5) are provided, where a memory apparatus (25) is provided for storing at least one stipulation from the terminal (5) for controlling the message interchange between the at least one control centre (1, 2, 3) and the terminal (5), and where a controller (30) is provided which controls the message interchange on the basis of the at least one stipulation, **characterized in that** the matching apparatus (15) is designed such that it receives from the at least one control centre (1, 2, 3) a message about a message which has arrived for the terminal (5), **in that** the matching apparatus (15) is designed such that it checks whether the terminal (5) can be reached, and **in that** if the terminal can be reached then a transmission process is started for the message to the terminal (5) in line with a transmission mode prescribed by the terminal (5), the transmission mode prescribed by the terminal (5) being a push mode or a pull mode.

## Revendications

1. Procédé de transmission de messages entre au moins une unité centrale (1, 2, 3) et au moins un terminal (5) par l'intermédiaire d'un réseau de télécommunications (10), dans lequel l'échange de messages est commandé par un dispositif adaptateur (15) entre au moins une unité centrale (1, 2, 3) et le terminal (5) en fonction d'au moins une consigne du terminal (5),
**caractérisé en ce que**
le dispositif adaptateur (15) est averti par au moins une unité centrale (1, 2, 3) lorsqu'un message arrive à destination du terminal (5),
le dispositif adaptateur (15) vérifie si le terminal (5) est disponible,
s'il est disponible, un processus de transmission du message au terminal (5) est engagé selon un mode de transmission prédéterminé par le terminal (5),
le terminal (5) prédétermine un mode « push » ou « pull » en tant que mode de transmission.

2. Procédé selon la revendication 1,
**caractérisé en ce que**
pour la transmission du message le dispositif adaptateur (15) adapte au moins une propriété à au moins une consigne du terminal (5).

3. Procédé selon la revendication 1 ou 2,
**caractérisé en ce que**
des messages de différentes unités centrales (1, 2, 3) sont transmis au terminal (5) après conversion par le dispositif adaptateur (15) en une forme homogène lisible par le terminal (5).

4. Procédé selon l'une quelconque des revendications précédentes,
**caractérisé en ce qu'**
en fonction de la consigne du terminal (5), le dispositif adaptateur (15) transmet au terminal (5) un message présent dans au moins une unité centrale (1, 2, 3) destiné au terminal (5) si celui-ci est disponible, ou avertit le terminal (5) de la disponibilité de ce message.

5. Procédé selon l'une quelconque des revendications précédentes,
**caractérisé en ce que**
le dispositif adaptateur (15) transmet plusieurs messages regroupés au terminal (5).

6. Procédé selon l'une quelconque des revendications précédentes,
**caractérisé en ce qu'**
en fonction de la consigne du terminal (5), le dispositif adaptateur (15) segmente et traite différentes parties d'un message comprenant plusieurs éléments.

7. Procédé selon l'une quelconque des revendications précédentes,
**caractérisé en ce qu'**
au moins une consigne du terminal (5) est déterminée par un utilisateur du terminal (5) sous forme d'un jeu de données et transmise au dispositif adaptateur (15).

8. Procédé selon l'une quelconque des revendications précédentes,
**caractérisé en ce que**
plusieurs jeux de données différents sont déterminés par un utilisateur du terminal (5) pour différentes fonctionnalités réalisables par le terminal (5) et déposés dans un dispositif de mémoire (25) associé au dispositif adaptateur (15).

9. Procédé selon la revendication 8,
**caractérisé en ce qu'**
une identification est associée à chacun des différents jeux de données.

10. Procédé selon la revendication 9,
**caractérisé en ce que**
l'utilisateur du terminal (5) sélectionne un jeu de données, le terminal (5) transmet l'identification du jeu de données sélectionné au dispositif adaptateur (15), le dispositif adaptateur (15) vérifie si un jeu de données avec l'identification reçue est stocké dans le dispositif de mémoire (25), et en présence d'un jeu de données associé à l'identification reçue dans le dispositif de mémoire (25) ce jeu de données est sélectionné.

11. Procédé selon la revendication 9 ou 10,
**caractérisé en ce que**
les jeux de données sont numérotés dans l'ordre de leur enregistrement dans le dispositif de mémoire (25), l'identification respective des jeux de données étant formée à partir de cette numérotation.

12. Procédé selon l'une quelconque des revendications précédentes,
**caractérisé en ce que**
dans le terminal (5) et le dispositif adaptateur (15), des protocoles sont utilisés qui comprennent des éléments fonctionnels pour le mode de transmission prédéterminé pour la transmission d'un message et ils effectuent une signalisation appropriée d'un message reçu à destination du terminal (5) au niveau du terminal (5).

13. Procédé selon l'une quelconque des revendications précédentes,
**caractérisé en ce qu'**
en cas de non-disponibilité, le message est mémorisé jusqu'à ce que le dispositif adaptateur (15) détecte une disponibilité du terminal (5).

14. Dispositif adaptateur (15) pour la mise en oeuvre d'un procédé selon l'une quelconque des revendications précédentes, comprenant au moins une interface (11, 12, 13) vers une unité centrale (1, 2, 3) et une interface (20) vers un terminal (5),
un dispositif de mémoire (25) pour stocker au moins une consigne du terminal (5) pour commander l'échange de messages entre au moins une unité centrale (1, 2, 3) et le terminal (5), et
une commande (30) qui commande l'échange de messages en fonction d'au moins une consigne,
**caractérisé en ce que**
le dispositif adaptateur (15) est conçu pour recevoir d'au moins une unité centrale (1, 2, 3) un message concernant un message destiné au terminal (5),
le dispositif adaptateur (15) vérifie si le terminal (5) est disponible, et
en cas de disponibilité, un processus de transmission pour le message au terminal (5) est engagé selon un mode de transmission prédéterminé par le terminal (5), le mode de transmission prédéterminé par le terminal (5) étant un mode « push » ou « pull »
